# EUROPÄISCHE PATENTSCHRIFT

(11) **EP 2 052 453 B1**
(45) Veröffentlichungstag und Bekanntmachung des Hinweises auf die Patenterteilung: **14.07.2010**
(21) Anmeldenummer: 06791311.1
(22) Anmeldetag: 16.08.2006
(51) Int. Cl.: H02J 13/00

(54) **ANORDNUNG MIT ZUMINDEST EINER MIT EINEM ENERGIEÜBERTRAGUNGSNETZ IN VERBINDUNG STEHENDEN MESSEINRICHTUNG UND VERFAHREN ZU DEREN BETRIEB**
ARRANGEMENT WITH AT LEAST ONE MEASURING DEVICE CONNECTED TO AN ENERGY TRANSMISSION SYSTEM AND METHOD FOR ITS OPERATION
ARRANGEMENT COMPRENANT AU MOINS UN DISPOSITIF DE MESURE EN LIASON AVEC UN RESEAU DE TRANSMISSION D'ENERGIE ET PROCEDE D'UTILISATION DE CELUI-CI

(43) Veröffentlichungstag der Anmeldung: 29.04.2009
(73) Patentinhaber: SIEMENS AKTIENGESELLSCHAFT, 80333 München (DE)
(72) Erfinder: LITZINGER, Andreas, 90765 Fürth (DE)
(86) Internationale Anmeldenummer: PCT/DE2006/001465
(87) Internationale Veröffentlichungsnummer: WO 2008/019636

(56) Entgegenhaltungen:
- EP-A- 1 566 875
- EP-A2- 0 507 381
- US-A1- 2003 231 447
- US-B1- 6 535 797

## Beschreibung

Anordnung mit zumindest einer mit einem Energieübertragungsnetz in Verbindung stehenden Messeinrichtung und Verfahren zu deren Betrieb

Die Erfindung bezieht sich auf eine Anordnung mit zumindest einer mit einem Energieübertragungsnetz in Verbindung stehenden Messeinrichtung und einer mit der Messeinrichtung über eine Datenübertragungseinrichtung verbundenen Überwachungseinrichtung, mit der sich das Energieübertragungsnetz zumindest abschnittsweise steuern lässt.

Derartige Anordnungen sind im Bereich der Energieversorgungstechnik bekannt und werden beispielsweise im Rahmen von Energieleitsystemen eingesetzt. Bei Energieleitsystemen werden mit Hilfe von Messeinrichtungen, die an ein Energieübertragungsnetz angeschlossen sind, Messdaten aufgenommen; die aufgenommenen Messdaten werden anschließend über eine Datenübertragungseinrichtung zu einer Überwachungseinrichtung, bei der es sich beispielsweise um eine Leiteinrichtung handeln kann, übertragen. Die Überwachungseinrichtung wertet die Messdaten aus und wirkt in Abhängigkeit von ihren Auswertergebnissen auf das Energieübertragungsnetz ein, indem es beispielsweise Leitungen zusätzlich einschaltet, Leitungen ausschaltet oder sonstige Veränderungen durchführt.

Die US 6,535,797 B1 offenbart ein elektrisches Verteilsystem mit einem Kommunikationsnetzwerk und entsprechenden Netz- und Kontrolleinrichtungen. Die Netzkomponenten sind hierbei zu so genannten Unterstationen zusammengefasst, die eine Regelungseinheit und ein Kommunikationsmodul aufweisen. Die Kommunikationsmodule sind unabhängig vom Energieverteilungsnetz über ein Kommunikationsnetzwerk miteinander verbunden.

Des Weiteren offenbart die US 2003/0231447 A1 eine Überwachungseinheit für einen Leistungsschalter, wobei die Steuerungsmodule über ein Netz, insbesondere ein SCADA-Netz oder das Internet, miteinander verbunden sind.

Der Erfindung liegt die Aufgabe zugrunde, eine Anordnung der eingangs beschriebenen Art im Hinblick auf eine noch größere Ausfallsicherheit als bisher zu verbessern.

Diese Aufgabe wird erfindungsgemäß durch eine Anordnung mit den Merkmalen gemäß Anspruch 1 gelöst. Vorteilhafte Ausgestaltungen der Erfindung sind in Unteransprüchen angegeben.

Danach ist erfindungsgemäß vorgesehen, dass die Messeinrichtung über zumindest eine weitere Datenübertragungseinrichtung mit zumindest einer weiteren Überwachungseinrichtung verbunden ist, die mit der einen Überwachungseinrichtung in Verbindung steht, wobei die Überwachungseinrichtungen derart ausgestaltet sind, dass sie jeweils die Messdaten der Messeinrichtung auswerten und untereinander die von der Messeinrichtung empfangenen Messdaten und/oder daraus abgeleitete Auswertergebnisse austauschen und im Falle eines Ausfalls der einen Überwachungseinrichtung die Steuerung des Energieübertragungsnetzes durch die weitere Überwachungseinrichtung wahrgenommen wird.

Ein wesentlicher Vorteil der Erfindung ist darin zu sehen, dass eine zuverlässige Steuerung des Energieübertragungsnetzes auch dann erfolgen kann, wenn eine der Überwachungseinrichtungen ausfällt; denn im Falle eines Ausfalls ist zumindest noch eine weitere Überwachungseinrichtung vorhanden, die die Steuerungsaufgaben wahrnehmen kann.

Ein weiterer wesentlicher Vorteil der Anordnung liegt darin, dass zwei Datenübertragungseinrichtungen vorhanden sind, über die jeweils die Messdaten übertragen werden können. Ein Ausfall einer Datenübertragungseinrichtung kann also allein nicht zu einem Ausfall des Gesamtsystems führen, weil die Übertragung der Messdaten noch über die zumindest eine weitere Datenübertragungseinrichtung erfolgen kann.

Im Hinblick auf eine besonders große Ausfallsicherheit wird es als vorteilhaft angesehen, wenn eine Vielzahl an Überwachungseinrichtungen und eine Vielzahl an Datenübertragungseinrichtungen vorhanden ist; beispielsweise sind zwei oder mehr weitere Überwachungseinrichtungen und zwei oder mehr weitere Datenübertragungseinrichtungen vorhanden.

Vorzugsweise stehen die Überwachungseinrichtungen über eine Privatverbindung unmittelbar bzw. direkt miteinander in Verbindung und tauschen über diese Privatverbindung die von der Messeinrichtung empfangenen Messdaten und/oder die daraus abgeleiteten Auswertergebnisse aus. Die Privatverbindung kann beispielsweise durch eine direkte Kabel- oder Funkverbindung gebildet sein.

Alternativ kann auch vorgesehen sein, dass die Überwachungseinrichtungen über eine der Datenübertragungseinrichtungen miteinander in Verbindung stehen und über diese Datenübertragungseinrichtung die von der Messeinrichtung empfangenen Messdaten und/oder die daraus abgeleiteten Auswertergebnisse austauschen.

Besonders bevorzugt übermittelt jede Überwachungseinrichtung alle von den Messeinrichtungen empfangenen Messdaten jeweils an alle anderen Überwachungseinrichtungen weiter, so dass jede Überwachungseinrichtung die Messdaten sowohl direkt als auch mittelbar über zumindest eine andere Überwachungseinrichtung erhält. Durch diese Vorgehensweise lässt sich in besonders einfacher Weise und damit vorteilhaft feststellen, dass eine der Überwachungseinrichtungen defekt ist, weil in einem solchen Fall eine Messdatenweiterleitung ausbleiben wird.

Doppelt empfangene Messdaten werden vorzugsweise eliminiert bzw. verworfen, um eine unnötige Speicherbesetzung zu vermeiden. Messdaten werden beispielsweise als "doppelt empfangen" erkannt, wenn sie von demselben Messgerät stammen, sich auf dieselbe Messgröße beziehen und denselben Zeitstempel - d. h. denselben Messwerterfassungszeitpunkt - aufweisen.

Die Datenübertragungseinrichtungen können beispielsweise durch ein Kommunikationsnetz gebildet sein, beispielsweise einem solchen, das geeignet ist, Datenpakete nach dem Internet-Standard zu übertragen. Auch können die Datenübertragungseinrichtungen durch ein Telefonnetz (analog / ISDN) oder dergleichen gebildet sein.

Im Hinblick auf eine einfache Bedienung der Überwachungseinrichtungen wird es als vorteilhaft angesehen, wenn diese mit mindestens einer Bedieneinrichtung in Verbindung stehen. Die Bedieneinrichtungen können zum Beispiel mit den Überwachungseinrichtungen über ein Netzwerk (z. B. LAN-Netzwerk) verbunden sein. Vorzugsweise ist an ein solches Netzwerk eine Vielzahl an Bedieneinrichtungen angeschlossen, mit denen sich jeweils alle Überwachungseinrichtungen oder einzelne davon bedienen lassen.

An die Überwachungseinrichtungen kann eine Vielzahl an Messeinrichtungen angeschlossen sein, deren Messdaten von den Überwachungseinrichtungen ausgewertet werden.

Im Hinblick auf eine maximale Ausfallsicherheit wird es als vorteilhaft angesehen, wenn jede der Messeinrichtungen jeweils über jede Datenübertragungseinrichtung an jeweils jede Überwachungseinrichtung angeschlossen ist.

Als Erfindung wird außerdem ein Verfahren zum Betreiben einer Anordnung angesehen, wie sie oben beschrieben ist. Erfindungsgemäß werten die Überwachungseinrichtungen jeweils die Messdaten der Messeinrichtung aus und tauschen untereinander die empfangenen Messdaten oder daraus abgeleitete Auswertergebnisse aus; im Falle eines Ausfalls der das Energieübertragungsnetz steuernden Überwachungseinrichtung wird die Steuerung des Energieübertragungsnetzes durch die weitere Überwachungseinrichtung bzw. durch eine der weiteren Überwachungseinrichtungen wahrgenommen.

Um eine besonders große Ausfallsicherheit zu gewährleisten, wird es als vorteilhaft angesehen, wenn die mit der Messeinrichtung erfassten Messdaten über die eine Datenübertragungseinrichtung sowohl an die eine als auch an die weitere Überwachungseinrichtung bzw. an weitere Überwachungseinrichtungen übertragen werden, wobei zumindest im Falle eines Ausfalls der einen Datenübertragungseinrichtung die Messdaten über zumindest eine der weiteren Datenübertragungseinrichtungen zu den Überwachungseinrichtungen übertragen werden.

Während des ausfallfreien Betriebs der einen Datenübertragungseinrichtung werden die Messdaten vorzugsweise zusätzlich bzw. parallel auch über die weitere Datenübertragungseinrichtung zu den Überwachungseinrichtungen übertragen; durch eine solche Parallelübertragung wird gewährleistet, dass selbst im Falle eines Ausfalls einer Datenübertragungseinrichtung keine Messdaten verloren gehen können, da eine vollständige Messdatenübertragung über die ausfallfreie(n) Datenübertragungseinrichtung(en) erfolgt.

Alternativ können die Messdaten während des ausfallfreien Betriebs der einen Datenübertragungseinrichtung ausschließlich über diese zu den Überwachungseinrichtungen übertragen werden; im Falle eines Ausfalls der einen Datenübertragungseinrichtung wird dann auf eine der weiteren Datenübertragungseinrichtungen umgeschaltet. Bei dieser Ausgestaltung dienen die weiteren Datenübertragungseinrichtungen also lediglich als Ersatzeinrichtungen, die nur im Notfall aktiviert werden.

Mit den zwei oder mehr Überwachungseinrichtungen werden die Messdaten der Messeinrichtung bevorzugt redundant bzw. parallel ausgewertet, um einen Ausfall einer der Überwachungseinrichtungen möglichst schnell feststellen zu können. Vorzugsweise wird jedoch jeweils nur mit einer einzigen Überwachungseinrichtung das Energieübertragungsnetz gesteuert ("hot standby"-Verfahren).

Im Falle eines Ausfalls der "steuernden" Überwachungseinrichtung wird bevorzugt auf eine andere, funktionstüchtige Überwachungseinrichtung umgeschaltet und das Energieübertragungsnetz weiter mit dieser gesteuert.

Alternativ ist es auch denkbar, mit allen Überwachungseinrichtungen parallel sowohl die Messdaten der Messeinrichtung auszuwerten als auch das Energieübertragungsnetz zumindest abschnittsweise zu steuern.

Die Erfindung wird nachfolgend anhand von Ausführungsbeispielen näher erläutert; dabei zeigen beispielhaft
- Figur 1: ein erstes Ausführungsbeispiel für eine erfindungs- gemäße Anordnung mit zwei Überwachungseinrichtungen und
- Figur 2: ein zweites Ausführungsbeispiel für eine erfin- dungsgemäße Anordnung mit drei Überwachungseinrich- tungen.

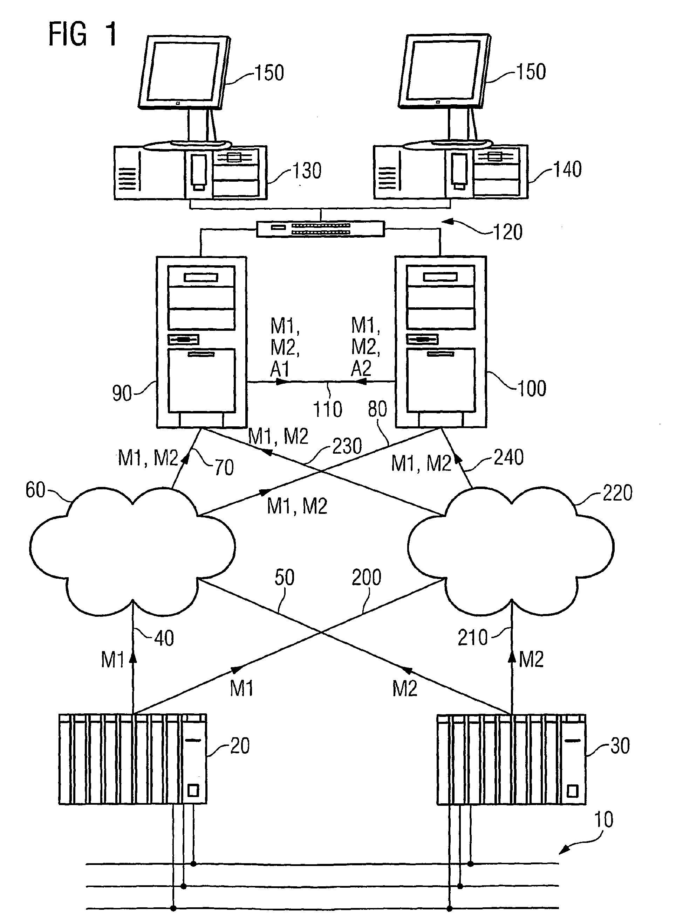

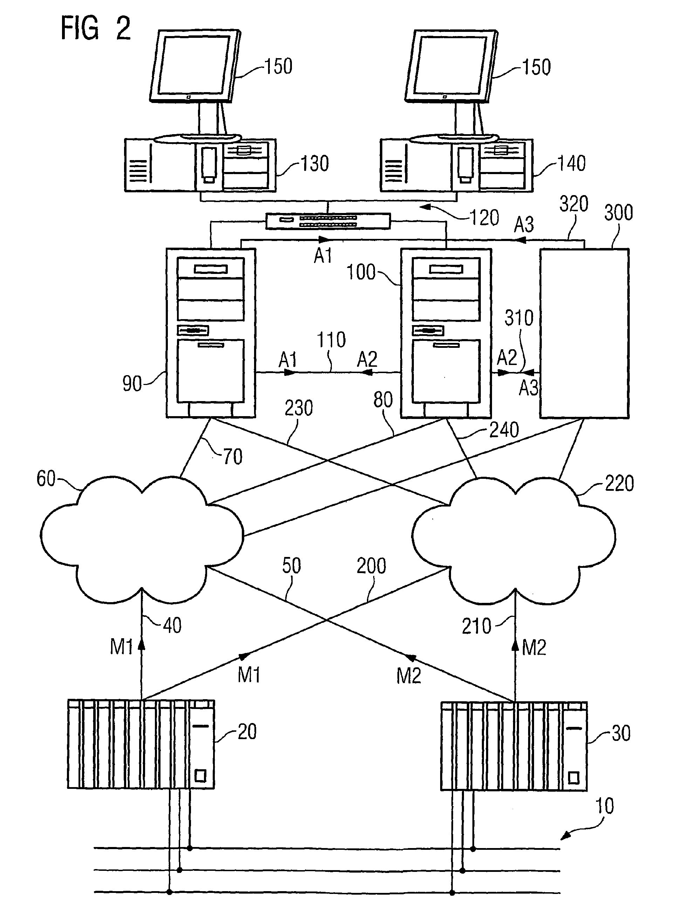

In den Figuren 1 und 2 werden für identische oder vergleichbare Komponenten der Übersicht halber dieselben Bezugszeichen verwendet.

In der Figur 1 erkennt man ein Energieversorgungsnetz 10, an das zwei Messeinrichtungen 20 und 30 angeschlossen sind. Die Messeinrichtungen 20 und 30 können beispielsweise Zeigermessgrößen-Messeinrichtungen sein, die - wie der Name andeutet - Zeigermessgrößen messen. Zeigermessgrößen-Messeinrichtungen werden englischsprachig bzw. fachsprachlich auch als "Phasor Measurement Units (PMU)" bezeichnet. Derartige Messeinrichtungen erlauben es beispielsweise, den Stabilitätszustand des Energieversorgungsnetzes 10 zu analysieren und in Echtzeit Messdaten an zugeordnete Überwachungseinrichtungen zu übersenden.

Wie sich in der Figur 1 erkennen lässt, sind die beiden Messeinrichtungen 20 und 30 über Verbindungsleitungen 40 und 50 mit einer Datenübertragungseinrichtung 60 verbunden, bei der es sich beispielsweise um ein Kommunikationsnetz handeln kann, das nach dem TCP/IP oder dem UDP-Standard arbeitet. Bei dem Kommunikationsnetz 60 kann es sich beispielsweise auch um das Internet handeln.

An das Kommunikationsnetz 60 sind über Verbindungsleitungen 70 und 80 zwei Überwachungseinrichtungen 90 und 100 angeschlossen, die untereinander mittels einer Privatverbindung 110 zusätzlich auch unmittelbar bzw. direkt miteinander verbunden sind.

Die beiden Überwachungseinrichtungen 90 und 100 sind darüber hinaus an ein Netzwerk 120 angeschlossen, mit dem außerdem zwei Bedieneinrichtungen 130 und 140 verbunden sind. Die beiden Bedieneinrichtungen 130 und 140 sind jeweils mit Visualisierungseinrichtungen 150 in Form von Bildschirmen ausgestattet.

Die beiden Überwachungseinrichtungen 90 und 100, die beiden Messeinrichtungen 20 und 30 sowie die beiden Bedieneinrichtungen 130 und 140 bilden eine Fernbereichsschutzeinrichtung bzw. eine Weitbereichsschutzeinrichtung für das Energieversorgungsnetz 10.

Wie sich in der Figur 1 darüber hinaus erkennen lässt, sind die beiden Messeinrichtungen 20 und 30 über weitere Verbindungsleitungen 200 und 210 mit einer weiteren Datenübertragungseinrichtung in Form eines Telefonnetzes 220 verbunden. Mit dem Telefonnetz 220 stehen die beiden Überwachungseinrichtungen 90 und 100 ebenfalls in Verbindung, und zwar über Verbindungsleitungen 230 und 240.

Die Anordnung gemäß Figur 1 kann beispielsweise wie folgt betrieben werden:
Die Messeinrichtungen 20 und 30 messen an den ihnen zugeordneten Messstellen Strom- bzw. Spannungsmesswerte - vorzugsweise in Zeigerform - und übersenden diese als Messdaten M1 bzw. M2 an die beiden Überwachungseinrichtungen 90 und 100. Das Bezugszeichen M1 bezeichnet in der Figur 1 die Messdaten der Messeinrichtung 20 und das Bezugszeichen M2 die Messdaten der Messeinrichtung 30.

Um sicherzustellen, dass die Messdaten M1 und M2 die beiden Überwachungseinrichtungen 90 und 100 tatsächlich erreichen, übermitteln die beiden Messeinrichtungen 20 und 30 die Messdaten vorzugsweise über beide Datenübertragungseinrichtungen 60 und 220; die beiden Datenübertragungseinrichtungen 60 und 220 arbeiten somit redundant.

Die beiden Überwachungseinrichtungen 90 und 100 arbeiten parallel und damit ebenfalls redundant und werten die eingehenden Messdaten M1 und M2 unter Bildung von Auswerteergebnissen A1 und A2 aus; das Bezugszeichen A1 bezieht sich in diesem Fall auf die Auswerteergebnisse der Überwachungseinrichtung 90 und das Bezugszeichen A2 auf die Auswerteergebnisse der Überwachungseinrichtung 100.

Die beiden Überwachungseinrichtungen 90 und 100 tauschen über die Privatverbindung 110 sowohl ihre Auswerteergebnisse A1 bzw. A2 als auch die empfangenen Messdaten M1 und M2 aus. Somit liegen in jeder der beiden Überwachungseinrichtungen 90 und 100 die Messdaten M1 bzw. M2 jeweils dreifach vor, weil sie nämlich über die Datenübertragungseinrichtung 60, die weitere Datenübertragungseinrichtung 220 sowie auch über die Privatverbindung 110 empfangen werden.

Die beiden Überwachungseinrichtungen 90 und 100 erkennen anhand der in den Messdaten M1 bzw. M2 enthaltenen Herkunftsinformationen, die die jeweilige Messeinrichtung und die jeweilige Messgröße charakterisieren, sowie anhand eines den Messzeitpunkt festlegenden Zeitstempels, welche der Messdaten bereits vorhanden und somit überflüssig sind. Die überflüssigen Messdaten werden verworfen, um Speicherplatz zu sparen.

Die beiden Überwachungseinrichtungen 90 und 100 werden beispielsweise im so genannten "hot standby"-Verfahren betrieben; dies bedeutet, dass eine der beiden Überwachungseinrichtungen, beispielsweise die Überwachungseinrichtung 90, als aktive Überwachungseinrichtung das Energieversorgungsnetz 10 in Abhängigkeit von den Messdaten M1 und M2 bzw. den daraus gebildeten Auswerteergebnissen A1 steuert. Die andere Überwachungseinrichtung 100 dient lediglich dazu, die Messergebnisse M1 und M2 auszuwerten und Auswerteergebnisse A2 zu bilden; eine aktive Einflussnahme auf das Energieversorgungsnetz 10 erfolgt durch die Überwachungseinrichtung 100 im Normalbetrieb nicht. Nur im Falle eines Ausfalls der Überwachungseinrichtung 90 übernimmt die andere Überwachungseinrichtung 100 die Aufgabe der Steuerung des Energieversorgungsnetzes 10.

Die Auswerteergebnisse A1 und A2 werden darüber hinaus über das Netzwerk 120 zu den beiden Bedieneinrichtungen 130 und 140 übertragen, mit denen eine manuelle Beeinflussung des Energieversorgungsnetzes 10 vorgenommen werden kann; hierzu werden entsprechende Bedieneingaben in die Bedieneinrichtungen 130 und 140 eingespeist, die über die aktive Überwachungseinrichtung 90 umgesetzt werden.

Die beiden Überwachungseinrichtungen 90 und 100 sind vorzugsweise darüber hinaus derart ausgestaltet, dass sie ein etwaigen Ausfall der jeweils anderen Überwachungseinrichtung feststellen können: Stellt beispielsweise die Überwachungseinrichtung 100 fest, dass über die Privatverbindung 110 keine vertrauenswürdigen Auswerteergebnisse A1 der Überwachungseinrichtung 90 empfangen werden, so schließt die Überwachungseinrichtung 100 auf einen Fehler der Überwachungseinrichtung 90 und schaltet sich selbst in einen aktiven Modus, in dem sie die Steuerung des Energieversorgungsnetzes 10 übernimmt. Über das Netzwerk 120 kann diesem Falle an die Bedieneinrichtungen 130 und 140 ein entsprechendes Alarmsignal übersandt werden, das auf einen Fehler hinweist. Gleichzeitig wird die Überwachungseinrichtung 90 bevorzugt inaktiv geschaltet, um eine fehlerhafte Beeinflussung des Energieversorgungsnetzes 10 zu vermeiden.

Auch kann der Ausfall einer der Leitungen 40, 50, 70, 80, 200, 210, 230 oder 240 verkraftet werden, weil jede Leitung jeweils "redundant" ausgeführt ist und eine entsprechende Ersatzleitung zugeordnet ist. Auch kann eine der Datenübertragungseinrichtungen 60 oder 220 ausfallen, weil jede der Datenübertragungseinrichtungen allein in der Lage ist, alle Messdaten zu übertragen.

Neben dem beschriebenen "hot standby"-Prinzip ist es auch möglich, die Überwachungseinrichtung 100 nur passiv zu betreiben: Dies bedeutet, dass die Überwachungseinrichtung 100 erst dann aktiv mit einer Auswertung der Messdaten M1 und M2 beginnt, wenn von der Überwachungseinrichtung 90 keine vertrauenswürdigen Auswerteergebnisse A1 mehr empfangen werden. Die Aufgabe der Überwachungseinrichtung 100 im passiven Betrieb besteht somit primär darin, die aktive Überwachungseinrichtung 100 zu überwachen, und nicht darin, stets die Messdaten M1 und M2 auszuwerten.

Anstelle einer dauerhaft redundanten bzw. mehrfachen Übertragung der Messdaten M1 und M2 ist es auch möglich, diese jeweils nur über eine einzige Datenübertragungseinrichtung, beispielsweise über die Datenübertragungseinrichtung 60, zu übermitteln. Nur im Falle eines Ausfalls der Datenübertragungseinrichtung 60 würden die Messeinrichtungen 20 und 30 dann auf die andere Datenübertragungseinrichtung 220 ausweichen und auf diese umschalten.

In der Figur 2 ist ein Ausführungsbeispiel für eine Anordnung mit drei Überwachungseinrichtungen gezeigt. Die dritte Überwachungseinrichtung 300 steht mit jeder der beiden anderen Überwachungseinrichtungen 90 und 100 über individuelle Privatleitungen 310 und 320 in Verbindung und kann über diese die empfangenen Messdaten M1 und M2 der beiden Messeinrichtungen 20 und 30 sowie je nach Betriebsart auch ihre eigenen Messergebnisse A3 an die jeweils anderen Überwachungseinrichtungen 90 und 100 übersenden. Zum Empfang der Messdaten M1 und M2 steht die dritte Messeinrichtung 300 mit jeder der beiden Datenübertragungseinrichtungen 60 und 220 in Verbindung.

In den Figuren 1 und 2 sind beispielhaft Anordnungen mit zwei bzw. drei Überwachungseinrichtungen sowie zwei Datenübertragungseinrichtungen dargestellt; selbstverständlich ist die Anzahl der Überwachungseinrichtungen und die Anzahl der Datenübertragungseinrichtungen beliebig: Je mehr Überwachungseinrichtungen und je mehr Datenübertragungseinrichtungen eingesetzt werden und je redundanter das Gesamtsystem betrieben wird, um so zuverlässiger lassen sich Fehler erkennen und gefährliche Betriebssituationen vermeiden.

## Patentansprüche

1. Anordnung mit zumindest einer mit einem Energieübertragungsnetz (10) in Verbindung stehenden Messeinrichtung (20, 30) und einer mit der Messeinrichtung über eine Datenübertragungseinrichtung (60) verbundenen Überwachungseinrichtung (90), wobei zumindest eine weitere Überwachungseinrichtung (100) vorhanden ist und die Überwachungseinrichtungen derart ausgestaltet sind, dass sie jeweils die Messdaten (M1, M2) der Messeinrichtung auswerten und untereinander die von der Messeinrichtung empfangenen Messdaten oder daraus abgeleitete Auswertergebnisse (A1, A2) austauschen,
**dadurch gekennzeichnet, dass** die Messeinrichtung über zumindest eine weitere Datenübertragungseinrichtung (220) mit zumindest der weiteren Überwachungseinrichtung (100) verbunden ist, die mit der einen Überwachungseinrichtung (90) in Verbindung steht und im Falle eines Ausfalls der einen Überwachungseinrichtung die Steuerung des Energieübertragungsnetzes durch die weitere Überwachungseinrichtung wahrgenommen wird, wobei die Überwachungseinrichtungen untereinander durch eine Privatverbindung (110) unmittelbar miteinander in Verbindung stehen und über die Privatverbindung die von der Messeinrichtung empfangenen Messdaten und/oder die daraus abgeleiteten Auswertergebnisse austauschen.

2. Anordnung nach Anspruch 1,
**dadurch gekennzeichnet, dass** die Überwachungseinrichtungen über eine der Datenübertragungseinrichtungen miteinander in Verbindung stehen und über diese Datenübertragungseinrichtung die von der Messeinrichtung empfangenen Messdaten und/oder die daraus abgeleiteten Auswertergebnisse austauschen.

3. Anordnung nach einem der voranstehenden Ansprüche,
**dadurch gekennzeichnet, dass** die Überwachungseinrichtungen doppelt oder mehrfach empfangene Messdaten als überflüssig erkennen und die überflüssigen Messdaten verwerfen.

4. Anordnung nach einem der voranstehenden Ansprüche,
**dadurch gekennzeichnet, dass** auf einen Defekt einer der Überwachungseinrichtungen geschlossen wird, wenn von dieser keine empfangenen Messdaten weitergeleitet werden.

5. Anordnung nach einem der voranstehenden Ansprüche,
**dadurch gekennzeichnet, dass** eine der Datenübertragungseinrichtungen durch ein Kommunikationsnetz (60) gebildet ist.

6. Anordnung nach Anspruch 5,
**dadurch gekennzeichnet, dass** das Kommunikationsnetz geeignet ist, Datenpakte (M1) nach dem Internet-Standard zu übertragen.

7. Anordnung nach einem der voranstehenden Ansprüche,
**dadurch gekennzeichnet, dass** eine der Datenübertragungseinrichtungen durch ein Telefonnetz (220) gebildet ist.

8. Anordnung nach einem der voranstehenden Ansprüche,
**dadurch gekennzeichnet, dass** die Überwachungseinrichtungen mit mindestens einer Bedieneinrichtung (130, 140) in Verbindung stehen.

9. Anordnung nach Anspruch 8,
**dadurch gekennzeichnet, dass** die mindestens eine Bedieneinrichtung mit den Überwachungseinrichtungen über ein Netzwerk (120) verbunden ist.

10. Anordnung nach Anspruch 9,
**dadurch gekennzeichnet, dass** an das Netzwerk eine Vielzahl an Bedieneinrichtungen angeschlossen ist, mit denen sich die Überwachungseinrichtungen bedienen lassen.

11. Anordnung nach einem der voranstehenden Ansprüche,
**dadurch gekennzeichnet, dass** an die Überwachungseinrichtungen eine Vielzahl an Messeinrichtungen (20, 30) angeschlossen ist, deren Messdaten von den Überwachungseinrichtungen ausgewertet werden.

12. Anordnung nach Anspruch 11,
**dadurch gekennzeichnet, dass** jede der Messeinrichtungen jeweils über jede Datenübertragungseinrichtung an jeweils jede Überwachungseinrichtung angeschlossen ist.

13. Verfahren zum Betreiben einer Anordnung nach einem der voranstehenden Ansprüche,
**dadurch gekennzeichnet, dass** die Überwachungseinrichtungen jeweils die Messdaten (M1, M2) der Messeinrichtung auswerten und untereinander die von der Messeinrichtung empfangenen Messdaten oder daraus abgeleitete Auswertergebnisse (A1, A2) austauschen und dass im Falle eines Ausfalls der das Energieübertragungsnetz steuernden Überwachungseinrichtung die Steuerung des Energieübertragungsnetzes durch die weitere Überwachungseinrichtung wahrgenommen wird, wobei die Überwachungseinrichtungen über eine Privatverbindung sowohl ihre Auswerteergebnisse A1 bzw. A2 als auch die empfangenen Messdaten M1 und M2 austauschen.

14. Verfahren nach Anspruch 13,
**dadurch gekennzeichnet, dass** mit der Messeinrichtung (20, 30) die das Energieübertragungsnetz (10) betreffenden Messdaten (M1, M2) über die eine Datenübertragungseinrichtung (60) sowohl an die eine als auch an die weitere Überwachungseinrichtung (100) übertragen werden, wobei zumindest im Falle eines Ausfalls der einen Datenübertragungseinrichtung (60) die Messdaten über die weitere Datenübertragungseinrichtung (220) zu den Überwachungseinrichtungen (90, 100) übertragen werden.

15. Verfahren nach Anspruch 14,
**dadurch gekennzeichnet, dass** während des ausfallfreien Betriebs der einen Datenübertragungseinrichtung (60) die Messdaten zusätzlich auch über die weitere Datenübertragungseinrichtung (220) zu den Überwachungseinrichtungen übertragen werden.

16. Verfahren nach Anspruch 14,
**dadurch gekennzeichnet, dass** während des ausfallfreien Betriebs der einen Datenübertragungseinrichtung (60) die Messdaten ausschließlich über diese zu den Überwachungseinrichtungen übertragen werden und im Falle eines Ausfalls der einen Datenübertragungseinrichtung auf die weitere Datenübertragungseinrichtung (220) umgeschaltet wird.

17. Verfahren nach einem der voranstehenden Ansprüche 13-16,
**dadurch gekennzeichnet, dass** doppelt oder mehrfach empfangene Messdaten als überflüssig erkennt und die überflüssigen Messdaten verworfen werden.

18. Verfahren nach einem der voranstehenden Ansprüche 13-17,
**dadurch gekennzeichnet, dass** auf einen Defekt in einer der Überwachungseinrichtungen geschlossen wird, wenn von dieser keine empfangenen Messdaten weitergeleitet werden.

19. Verfahren nach einem der voranstehenden Ansprüche 13-18,
**dadurch gekennzeichnet, dass** mit allen Überwachungseinrichtungen die Messdaten der Messeinrichtung ausgewertet werden, jedoch nur mit einer Überwachungseinrichtung das Energieübertragungsnetz zumindest abschnittsweise gesteuert wird.

20. Verfahren nach Anspruch 19,
**dadurch gekennzeichnet, dass** im Falle eines Ausfalls der einen Überwachungseinrichtung das Energieübertragungsnetz zumindest abschnittsweise mit einer anderen Überwachungseinrichtung gesteuert wird.

21. Verfahren nach einem der voranstehenden Ansprüche 13-20,
**dadurch gekennzeichnet, dass** mit den Überwachungseinrichtungen parallel sowohl die Messdaten der Messeinrichtung ausgewertet werden als auch das Energieübertragungsnetz zumindest abschnittsweise gesteuert wird.

22. Verfahren nach einem der voranstehenden Ansprüche 13-21,
**dadurch gekennzeichnet, dass** die Überwachungseinrichtungen jeweils mit mindestens einer Bedieneinrichtung bedient werden.

## Claims

1. Arrangement having at least one measurement device (20, 30), which is connected to a power transmission system (10), and having a monitoring device (90) which is connected to the measurement device via a data transmission device (60), wherein at least one further monitoring device (100) is provided, and the monitoring devices are designed such that they each evaluate the measurement data (M1, M2) of the measurement device and interchange the measurement data, received from the measurement device, or evaluation results (A1, A2) derived therefrom, with one another,
**characterized in that** the measurement device is connected via at least one further data transmission device (220) to at least the further monitoring device (100) which is connected to the one monitoring device (90) and, if that monitoring device fails, the power transmission system is controlled by the further monitoring device, wherein the monitoring devices are directly connected to one another by means of a private link (110), and interchange the measurement data received from the measurement device and/or the evaluation results derived therefrom via the private link.

2. Arrangement according to Claim 1,
**characterized in that** the monitoring devices are connected to one another via one of the data transmission devices and interchange the measurement data received from the measurement device and/or the evaluation results derived therefrom via this data transmission device.

3. Arrangement according to one of the preceding claims,
**characterized in that** the monitoring devices identify measurement data received two or more times as being superfluous, and reject the superfluous measurement data.

4. Arrangement according to one of the preceding claims, **characterized in that** a defect in one of the monitoring devices is deduced if it does not pass on any received measurement data.

5. Arrangement according to one of the preceding claims,
**characterized in that** one of the data transmission devices is formed by a communication network (60).

6. Arrangement according to Claim 5,
**characterized in that** the communication network is suitable for transmitting data packets (M1) in accordance with the Internet Standard.

7. Arrangement according to one of the preceding claims,
**characterized in that** one of the data transmission devices is formed by a telephone network (220).

8. Arrangement according to one of the preceding claims,
**characterized in that** the monitoring devices are connected to at least one control device (130, 140).

9. Arrangement according to Claim 8,
**characterized in that** the at least one control device is connected to the monitoring devices via a network (120).

10. Arrangement according to Claim 9,
**characterized in that** a multiplicity of control devices are connected to the network and can be used to control the monitoring devices.

11. Arrangement according to one of the preceding claims,
**characterized in that** a multiplicity of measurement devices (20, 30) are connected to the monitoring devices, and their measurement data is evaluated by the monitoring devices.

12. Arrangement according to Claim 11,
**characterized in that** each of the measurement devices is respectively connected to each monitoring device via each respective data transmission device.

13. Method for operation of an arrangement according to one of the preceding claims,
**characterized in that** the monitoring devices each evaluate the measurement data (M1, M2) of the measurement device and interchange with one another the measurement data received from the measurement device, or evaluation results (A1, A2) derived therefrom, and **in that**, if the monitoring device which is controlling the power transmission system fails, the control of the power transmission system is carried out by the further monitoring device, wherein the monitoring devices interchange both their evaluation results A1 and A2 and the received measurement data M1 and M2 via a private link.

14. Method according to Claim 13,
**characterized in that** the measurement data (M1, M2) relating to the power transmission system (10) is transmitted by means of the measurement device (20, 30) via the one data transmission device (60) both to the one and to the further monitoring device (100), wherein, at least in the event of a failure of the one data transmission device (60), the measurement data is transmitted via the further data transmission device (220) to the monitoring devices (90, 100).

15. Method according to Claim 14,
**characterized in that**, when the one data transmission device (60) is being operated without any failures, the measurement data is additionally also transmitted via the further data transmission device (220) to the monitoring devices.

16. Method according to Claim 14,
**characterized in that**, when the one data transmission device (60) is being operated without any failures, the measurement data is transmitted exclusively via this data transmission device (60) to the monitoring devices and, in the event of a failure of that data transmission device, switching takes place to the further data transmission device (220).

17. Method according to one of the preceding Claims 13-16,
**characterized in that** measurement data received two or more times is identified as being superfluous, and the superfluous measurement data is rejected.

18. Method according to one of the preceding Claims 13-17,
**characterized in that** a defect in one of the monitoring devices is deduced if no received measurement data is passed on from it.

19. Method according to one of the preceding Claims 13-18,
**characterized in that** the measurement data of the measurement device is evaluated by all the monitoring devices, but the power transmission system is controlled, at least partially, only by one monitoring device.

20. Method according to Claim 19,
**characterized in that**, in the event of failure of the one monitoring device, the power transmission system is controlled, at least partially, by another monitoring device.

21. Method according to one of the preceding Claims 13-20,
**characterized in that**, not only is the measurement data from the measurement device evaluated, but the power transmission system is controlled, at least partially, in parallel by the monitoring devices.

22. Method according to one of the preceding Claims 13-21,
**characterized in that** the monitoring devices are each controlled by at least one control device.

## Revendications

1. Agencement comprenant au moins un dispositif ( 20, 30 ) de mesure en liaison avec un réseau (10) de transmission d'énergie et un dispositif ( 90 ) de contrôle relié au dispositif de mesure par un dispositif ( 60 ) de transmission de données, au moins un autre dispositif ( 100 ) de contrôle étant présent et les dispositifs de contrôle étant conformés de manière à exploiter respectivement les données (M1, M2 ) de mesure du dispositif de mesure et à échanger entre eux les données de mesure reçues par le dispositif de mesure ou des résultats ( A1, A2 ) d'exploitation qui s'en déduisent,
**caractérisé en ce que** le dispositif de mesure est relié par au moins un autre dispositif ( 220) de transmission de données à au moins l'autre dispositif (100) de contrôle, qui communique avec le un dispositif ( 90 ) de contrôle, et, si le un dispositif de contrôle est défaillant, la commande du réseau de transmission d'énergie est prise en charge par l'autre dispositif de contrôle, les dispositifs de contrôle étant en liaison entre eux et directement entre eux par une liaison ( 110 ) privée et les données de mesures reçues par le dispositif de mesure et/ou les résultats d'exploitation qui s'en déduisent étant échangées par la liaison privée.

2. Agencement suivant la revendication 1,
**caractérisé en ce que**
les dispositifs de contrôle sont en liaison entre eux par l'un des dispositifs de transmission de données et échangent, par ce dispositif de transmission de données, les données de mesure reçues par le dispositif de mesure et/ou les résultats d'exploitation qui s'en déduisent.

3. Agencement suivant l'une des revendications précédentes,
**caractérisé en ce que**
les dispositifs de contrôle reconnaissent comme superflues des données de mesures reçues en double ou plusieurs fois et rejettent les données de mesure superflues.

4. Agencement suivant l'une des revendications précédentes,
**caractérisé en ce que**
l'on déduit un défaut de l'un des dispositifs de contrôle, lorsque des données de mesure reçues ne sont pas acheminées par celui-ci.

5. Agencement suivant l'une des revendications précédentes,
**caractérisé en ce que**
l'un des dispositifs de transmission de données est formé par un réseau ( 60 ) de communication.

6. Agencement suivant la revendication 5,
**caractérisé en ce que**
le réseau de communication est approprié pour transmettre des paquets ( M1) de données suivant la norme internet.

7. Agencement suivant l'une des revendications précédentes,
**caractérisé en ce que**
l'un des dispositifs de transmission de données est formé par un réseau ( 220 ) téléphonique.

8. Agencement suivant l'une des revendications précédentes,
**caractérisé en ce que**
les dispositifs de contrôle sont en liaison avec au moins un dispositif ( 130, 140 ) de service.

9. Agencement suivant la revendication 8,
**caractérisé en ce que**
au moins un dispositif de service est relié aux dispositifs de contrôle par un réseau ( 120 ).

10. Agencement suivant la revendication 9,
**caractérisé en ce que**
au réseau est raccordée une pluralité de dispositifs de service, par lesquels les dispositifs de contrôle peuvent être desservis.

11. Agencement suivant l'une des revendications précédentes,
**caractérisé en ce que**
aux dispositifs de contrôle est raccordée une pluralité de dispositifs ( 20, 30 ) de mesure, dont les données de mesure sont exploitées par les dispositifs de contrôle.

12. Agencement suivant la revendication 11,
**caractérisé en ce que**
chacun des dispositifs de mesure est raccordé respectivement à respectivement chaque dispositif de contrôle par respectivement chaque dispositif de transmission de données.

13. Procédé pour faire fonctionner un agencement suivant l'une des revendications précédentes,
**caractérisé en ce que** les dispositifs de contrôle exploitent respectivement les données (M1, M2 ) de mesure du dispositif de mesure et échangent entre eux les données de mesure par le dispositif de mesure ou des résultats (A1, A2 ) d'exploitation qui s'en déduisent et **en ce que**, si le dispositif de contrôle commandant le réseau de transmission d'énergie est défaillant, la commande du réseau de transmission d'énergie est prise en charge par l'autre dispositif de contrôle, le dispositif de contrôle échangeant par une ligne privée tant leurs résultats A1 ou A2 d'exploitation qu'également les données M1 et et M2 de mesure reçues.

14. Procédé suivant la revendication 13,
**caractérisé en ce que**
par le dispositif ( 20, 30 ) de mesure, les données ( M1, M2) de mesure concernant le réseau (10) de transmission d'énergie sont transmises, par le dispositif (60) de transmission de données, tant à l'un qu'également à l'autre dispositif ( 100 ) de contrôle, dans lequel, au moins si le un dispositif ( 60) de transmission de données est défaillant, les données de mesure sont transmises aux dispositifs ( 90, 100) par l'autre dispositif ( 220 ) de transmission de données.

15. Procédé suivant la revendication 14,
**caractérisé en ce que**
pendant le fonctionnement sans défaut du un dispositif ( 60 ) de transmission de données, les données de mesure sont transmises supplémentairement aussi aux dispositifs de contrôle par l'autre dispositif (220) de transmission de données.

16. Procédé suivant la revendication 14,
**caractérisé en ce que**
pendant le fonctionnement sans défaut du un dispositif ( 60 ) de transmission de données, les données de mesure sont transmises exclusivement par celui-ci aux dispositifs de contrôle et, si le un dispositif de transmission de données est défaillant, elles passent sur l'autre dispositif ( 220 ) de transmission de données.

17. Procédé suivant l'une des revendications précédentes 13 à 16,
**caractérisé en ce que**
des données de mesure reçues en double plusieurs fois sont identifiées comme superflues et les données de mesure superflues sont rejetées.

18. Procédé suivant l'une des revendications précédentes 13 à 17,
**caractérisé en ce que**
l'on déduit un défaut dans l'un des dispositifs de contrôle, si des données de mesure reçues ne sont pas acheminées par celui-ci.

19. Procédé suivant l'une des revendications précédentes 13 à 18,
**caractérisé en ce que**
les données de mesure du dispositif de mesure sont exploitées par tous les dispositifs de contrôle, mais le réseau de transmission d'énergie n'est commandé, au moins par partie, que par un dispositif de contrôle.

20. suivant la revendication 19,
**caractérisé en ce que**
si le un dispositif de contrôle est défaillant, le réseau de transmission d'énergie est commandé, au moins par partie, par un autre dispositif de contrôle.

21. Procédé suivant l'une des revendications précédentes 13 à 20,
**caractérisé en ce que**
par les dispositifs de contrôle, à la fois l'on exploite les données de mesure du dispositif de mesure et l'on commande aussi, au moins par partie, le réseau de transmission d'énergie.

22. Procédé suivant l'une des revendications précédentes 13 à 21,
**caractérisé en ce que**
les dispositifs de contrôle sont desservis respectivement par au moins un dispositif de service.
